(19) Europäisches Patentamt
European Patent Office
Office européen des brevets

(11) **EP 2 472 693 A2**

(12) **EUROPEAN PATENT APPLICATION**

(43) Date of publication:
**04.07.2012 Bulletin 2012/27**

(51) Int Cl.:
*H02J 3/18* (2006.01)

(21) Application number: **11194750.3**

(22) Date of filing: **21.12.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **04.01.2011 US 983940**

(71) Applicant: **General Electric Company**
**Schenectady, New York 12345 (US)**

(72) Inventors:
- **Rouaud, Didier Gilbert**
  **Atlanta, GA Georgia 30339 (US)**
- **Krishnamoorthy, Harish Sarma**
  **College Station, TX Texas 77840 (US)**
- **Vadali, Manoj Kumar**
  **560066 Bangalore, Karnataka (IN)**

(74) Representative: **Cleary, Fidelma**
**GE International Inc.**
**Global Patent Operation-Europe**
**15 John Adam Street**
**London WC2N 6LU (GB)**

(54) **Integrated electric meter with VAR capability**

(57) An integrated electric meter with VAR capability is disclosed. In one aspect, an electric meter (200) determines a plurality of power related parameters for an AC network, and a VAR generation unit (205) integrated with the electric meter (200) uses the plurality of power related parameters to inject a desired amount of reactive power in the AC network and correct power factor.

FIG. 2

EP 2 472 693 A2

## Description

BACKGROUND OF THE INVENTION

The present invention relates generally to electricity distribution and more particularly to integrating an electric meter with a volt-ampere reactive (VAR) generation unit to control power quality in an electrical power system.

Generally, electricity distribution is the final stage in the delivery of electricity to customers. Typically, an electrical distribution system (e.g., electrical sub-stations, power lines, pole-mounted transformers, distribution wiring, electric energy meters, etc.) carries electricity generated from a transmission system (e.g., power plant, transformers, high voltage transmission lines, etc.) and delivers it to the customers. In general, electricity transmission and distribution efficiency is at a level that causes megawatts of power to be lost. The loss of power is due primarily to a variety of factors that include technical losses, non-technical losses and commercial losses. Technical losses include $I^2R$ losses, losses due to transformers, unbalanced loads, and losses due to overloading; non-technical losses include tampered meters, unbilled customers, and direct tapping of lines; while commercial losses include defects in meters and billing.

BRIEF DESCRIPTION OF THE INVENTION

The present invention resides in, a system comprising an electric meter that determines a plurality of power related parameters for an AC network. A VAR generation unit integrated with the electric meter uses the plurality of power related parameters to inject a desired amount of reactive power in the AC network and correct power factor.

The VAR generation unit may be a static VAR generation unit integrated with the electric meter and may perform voltage stabilization of the voltage level in the AC network. The static VAR generation unit comprises a capacitor, a switch system that connects the capacitor into the AC network, and a controller that controls the connection of the capacitor into the AC network by the switch system. The static VAR generation unit injects the desired amount of reactive power in the AC network in a location that is upstream or downstream of the electric meter. The static VAR generation unit performs the voltage stabilization in an operating range that is determined as function of the size of the capacitor and a predetermined control strategy implemented by the controller.

BRIEF DESCRIPTION OF THE DRAWINGS

Embodiments of the present invention will now be described, by way of example only, with reference to the accompanying drawings, in which:

FIG. 1 is a schematic diagram illustrating an overview of an electric meter in use with an electrical distribution system;

FIG. 2 is a schematic diagram of an electric meter integrated with a VAR generation unit according to an embodiment of the present invention;

FIG. 3 is a schematic diagram of an electric meter integrated with a VAR generation unit according to another embodiment of the present invention;

FIG. 4 is a schematic diagram showing the details of the switch system depicted in FIGS. 2-3 according to an embodiment of the present invention;

FIG. 5 is a schematic block diagram showing some of the functionalities performed in the electric meter according to the embodiment of the present invention depicted in FIGS. 2-4;

FIG. 6 is a schematic block diagram illustrating an electric meter coupled in parallel with a VAR generation unit according to an embodiment of the present invention;

FIG. 7 is a schematic block diagram illustrating a VAR generation unit located upstream from an electric meter and coupled in series according to an embodiment of the present invention;

FIG. 8 is a schematic block diagram illustrating a VAR generation unit located downstream from an electric meter and coupled in series according to an embodiment of the present invention;

FIG. 9 is a schematic diagram of another electric meter integrated with a VAR generation unit according to another embodiment of the present invention; and

FIG. 10 is a schematic block diagram showing some of the functionalities performed in the electric meter according to the embodiment of the present invention depicted in FIG. 9.

DETAILED DESCRIPTION OF THE INVENTION

Various embodiments of the present invention are directed to controlling power quality in an electrical power system by integrating a VAR generation unit with an electric meter. In one embodiment, the VAR generation unit uses a plurality of power related parameters determined by the electric meter to inject a desired amount of reactive power in an AC network and correct power factor. In another embodiment, the VAR generation unit uses the plurality of power related parameters to perform voltage stabilization of the voltage level in the AC network. In another embodiment, the VAR generation unit uses the plurality of power related parameters to perform a desired amount of harmonics compensation of the voltage level in the AC network. In one embodiment, the VAR generation unit uses a plurality of power related parameters determined by the electric meter to inject a desired amount of real power in the AC network. In these embodiments, the VAR generation unit may be located in parallel or serial with the electric meter. Whether in parallel or serial, the VAR generation unit may be located upstream or downstream of the electric meter. In another embodiment, electric meter and VAR generation unit may be configured to have a ride-through component to sustain voltage in the AC network at predetermined instances of power losses. In another embodiment, electric meter and VAR generation unit may be configured to have a power injector (e.g., a battery) that injects additional power in the AC network. In another embodiment, electric meter and VAR generation unit may be configured with measurement devices (e.g., voltage detection devices and current sensors) located within the AC network that measure predetermined electrical parameters that are used by the electric meter to determine the plurality of power related parameters for the AC network.

Technical effects of the various embodiments of the present invention include improving the power factor in an electrical power system and the power quality (e.g., reliability and customer comfort) for customers. Other technical effects associated with the various embodiments of the present invention include reducing losses of power in an electrical power system, and improving electricity transmission and distribution efficiency.

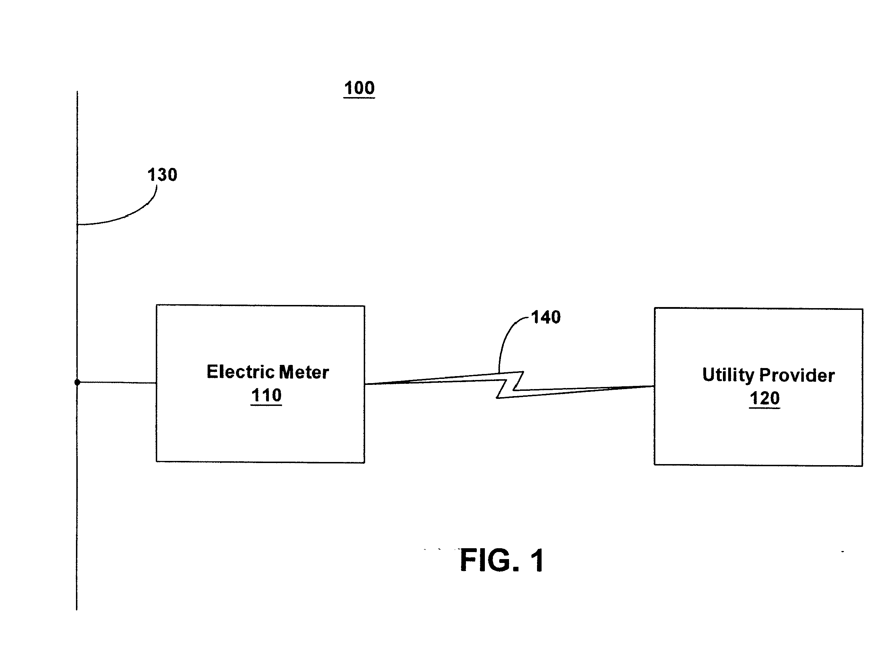

Referring to the drawings, FIG. 1 is a schematic diagram illustrating an overview of an electrical distribution system 100 having an electric meter 110 in use with a utility provider 120 and a customer utility line 130. As shown in FIG. 1, electric meter 110 is coupled to customer utility line 130 from which an electric service (e.g., electricity supply) is received from utility provider 120. Note that for ease of illustration, electric distribution system 100 is shown without electrical sub-stations, power lines, pole-mounted transformers, distribution wiring, however, those skilled in the art will recognize that an electric distribution system may have these components as well as others not listed herein. Electric meter 110 may monitor and store electricity usage and/or demand information for customer utility line 130. Electric meter 110 may further monitor and record status information for customer utility line 130. Utility provider 120 may interact with electric meter 110 through a signal path 140. A variety of methods, both wired and wireless, may be utilized for signal path 140. For example, electric meter 110 may communicate through a telephone line, an automatic meter reading (AMR) system, an optical port, a Recommended Standard (RS)-232 line, wireless systems, Power line Carriers (PLC) or through other means of communications. In addition, receiving devices, such as handheld devices, may communicate with electric meter 110. These receiving devices may subsequently communicate any collected information to utility provider 120. Examples of receiving devices may include cellular devices such as phones, personal digital assistants (PDAs), notebook computers, specialized receivers, or handheld devices. The receiving devices or aspects thereof may also be incorporated with mobile vehicles, including those utilized with automatic meter reading systems. These types of receiving devices may be utilized by personnel visiting one or more electric meters 110.

In one embodiment of the present invention, electric meter 110 is integrated with a VAR generation unit to control power quality in an electrical power system. As used herein, integrating a VAR generation unit with electric meter 110 can include having the VAR generation unit built within electric meter 110, coupled externally to the meter, or have some components that are built within the meter and some components that are coupled externally to the meter. Furthermore, the term "VAR generation" as used in the context of the various embodiments described herein includes VAR generation, VAR absorption, and generating or absorbing real power in the case of connection of the VAR generation unit to an auxiliary system (e.g., discharging or recharging batteries, injecting power from solar panels into a line).

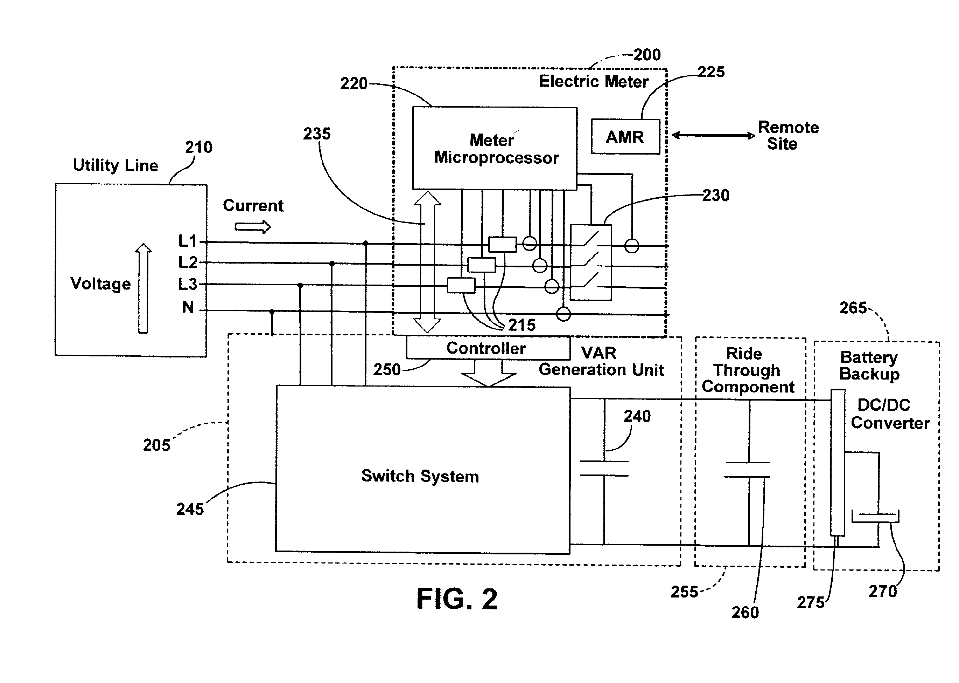

FIG. 2 is a schematic block diagram of an electric meter 200 integrated with a VAR generation unit 205 according to an embodiment of the present invention. As shown in FIG. 2, electric meter 200 is coupled to utility line 210 through lines L1, L2, L3 and N. Although FIG. 2 shows electric meter 200 coupled to utility line 210 through lines L1, L2, L3 and N, which is applicable for an industrial application (i.e., three-phase), those skilled in the art will recognize that electric meter 200 may be coupled to utility line 210 in a residential application (i.e., single phase) having line L1 and N and applications that are multi-phased.

As shown in FIG. 2, electric meter 200 includes current measurement devices 215 that measure current in lines L1, L2, and L3. In one embodiment, current measurement devices 215 may be current transformers, however, those skilled in the art will recognize that other current measurement devices may be used such as for example, Hall-Effect sensors, shunts, Rogowski coils and fiber optic current sensors. An output representative of the measured current signal is supplied from each of current measurement devices 215 to a meter microprocessor 220.

In addition to receiving the measured current signals from current measurement devices 215, meter microprocessor 220 may receive other measurements provided by other measurement devices (not shown) that may be located within or outside of electric meter 200. A non-exhaustive listing of other inputs that may be received by meter microprocessor 220 include voltage measurements, phase voltage measurements, remote disconnect relay status signals, load control relay status signals, battery status signals, reset signals, arming signals, test signals from any of the push buttons on the meter, terminal cover removal detection signals, and any signals related to the communication media of the meter like, automatic meter reading (AMR), power line communication carrier (PLCC), WiFi, etc.

In response to receiving the measured signals, meter microprocessor 220 performs various processing operations as explained below on this data to determine power related parameters that are used to control power quality. Those skilled in the art will recognize that there may be more than one processing unit within electric meter 200 to perform any of the below described signal processing operations. An illustrative, but non-exhaustive listing of processing units that may be utilized include a metering processing unit such as a system on a chip (SOC) metering chip and an applications processing unit, both of which are commercially available.

FIG. 2 shows that electric meter 200 further includes an AMR component 225 that facilitates automatically collecting consumption, diagnostic, and status data from energy metering devices and transferring that data to a central database (not shown) for billing, troubleshooting, and analyzing. AMR component 225 provides measured data from current measurement devices 215 and the other measurement devices along with various consumption calculations performed by meter microprocessor 220 to a remote location (not shown). Handheld, mobile and network technologies based on telephony platforms (wired and wireless), radio frequency (RF), or power line transmission can be used to facilitate communication between electric meter 200 and the remote site.

Electric meter 200 as shown in FIG. 2 further includes a disconnect switch 230 that allows the meter to remain installed upon activation, but remove electrical service from a customer that is attached to the meter. Although not shown, disconnect switch 230 may have a two-way communication device that enables remote activation of the switch, so that the electric service can be reconnected and disconnected.

For the sake of simplicity in illustrating various embodiments of the present invention, those skilled in the art will recognize that not all features and functionalities associated with electric meter 200 are illustrated in FIG. 2. For example, those skilled in the art will appreciate that electric meter 200 can have other relays than what is shown in FIG. 2. In addition, electric meter 200 can be configured to measure different electrical services. In addition, electric meter 200 may have an LCD or other means to display various parameters. Electric meter 200 could also have additional detection circuits to detect different conditions such as if there is sufficient power being supplied to meter microprocessor 220. Other components that electric meter 200 may include are memory for storing data and instructions, communication interfaces, a power supply and various switches.

Referring back to FIG. 2, VAR generation unit 205, coupled to the electric meter via a data bus 235, uses the plurality of power related parameters to inject a desired amount of reactive power in an AC network of an electrical power system (i.e., lines L1, L2 and L3) and correct the power factor. In addition, VAR generation unit 205 uses the plurality of power related parameters to perform voltage stabilization of the voltage level in lines L1, L2 and L3. Furthermore, VAR generation unit 205 uses the plurality of power related parameters to perform a desired amount of harmonics compensation of the voltage level in lines L1, L2 and L3. In addition, VAR generation unit 205 may use the plurality of power related parameters to inject real power in the AC network. A more detailed explanation of the injection of a desired amount of reactive or real power, correction of power factor, performance of voltage stabilization and injection of harmonics compensation is set forth below.

As shown in FIG. 2, VAR generation unit 205 includes a storage element such as a capacitor 240, a switch system 245 that connects the capacitor into lines L1, L2, and L3, and a controller 250 that controls the connection of capacitor 240 into lines L1, L2, and L3 by switch system 245. Below is a more detailed description of capacitor 240, switch system 245 and controller 250 and the various configurations that may be used to form VAR generation unit 245. In one embodiment, VAR generation unit 205 may be a static VAR generation unit. Because VAR generation unit 245 is integrated with electric meter 200, it may be a mini static VAR generation unit or micro static VAR generation unit.

FIG. 2 further shows that electric meter 200 and VAR generation unit 205 may be configured to have a ride-through component 255 that is used to sustain voltage in the AC network at predetermined instances of power losses in the AC network. As shown in FIG. 2, ride-through component 255 may include a ride-through capacitor 260 or another form of a storage element. In another embodiment, ride-through component 255 may comprise ride-through capacitor 260 coupled to a battery system 265 formed from a source 270 and a DC/DC converter 275. Those skilled in the art will recognize that more than one battery 265 may be used. In another embodiment, ride-through component 255 may comprise battery system 265 without ride-through capacitor 260. Below is a more detailed description of ride-through component 255 and how it can be used to sustain voltage in lines L1, L2 and L3.

In another embodiment, battery 265 can be used directly or indirectly with electric meter 200 and VAR generation unit 205 to act as a power injector that injects additional power in the AC network. One scenario where battery 265 is suitable for use is when a customer desires to have a backup capability that does not necessitate having a full back-up generator. In this embodiment, battery 265 can be formed from sources that include but are not limited to batteries, solar cells and fuel cells. Below is a more detailed description of battery 265 and how it can be used to inject additional power into lines L1, L2 and L3.

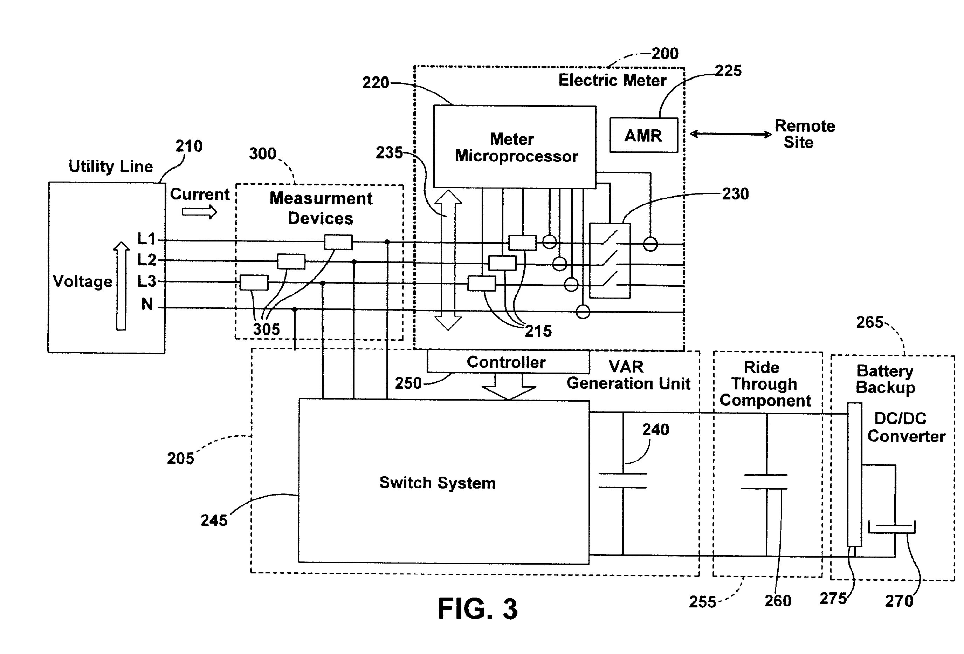

FIG. 3 is a schematic block diagram of electric meter 200 integrated with a VAR generation unit 205 according to another embodiment of the present invention. In particular, in this embodiment, electric meter 200 and VAR generation unit 205 are configured with measurement devices 300 located within the AC network (about lines L1, L2, and L3) that measure predetermined electrical parameters that are used by the electric meter to determine the plurality of power related parameters. In FIG. 3, measurement devices 300 include current measurement devices 305 that measure current in lines L1, L2, and L3. In one embodiment, current measurement device 305 may be current transformers, however, those skilled in the art will recognize that other current measurement devices may be used such as for example, Hall Effect sensors, shunts, Rogowski coils and fiber optic current sensors. Furthermore, those skilled in the art will recognize that measurement devices 300 may include other devices (e.g., voltage detection devices, phase voltage detection devices, etc.) that output their measurements to electric meter 200.

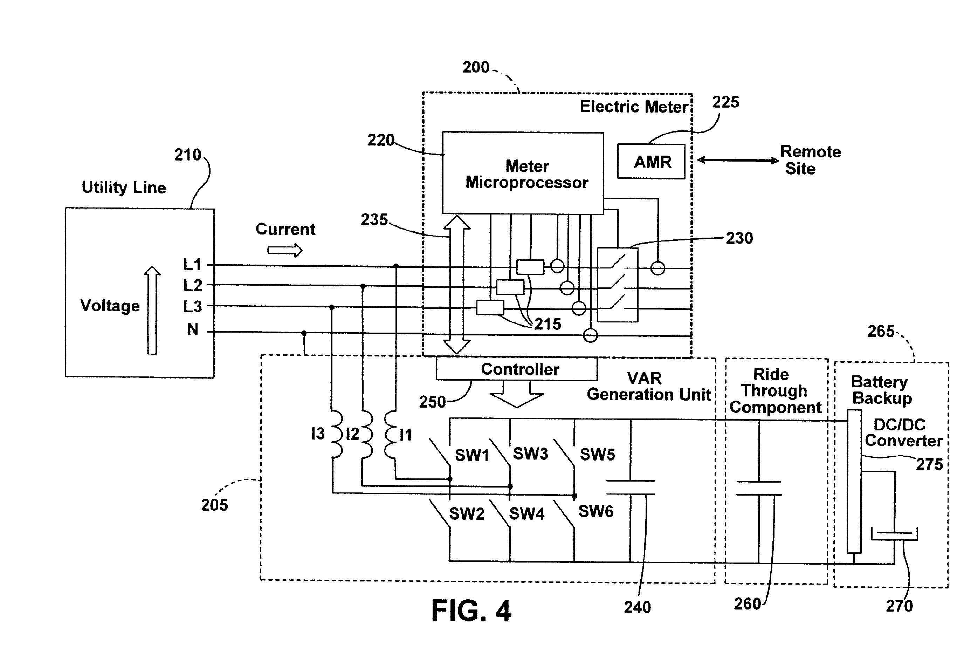

FIG. 4 is a schematic block diagram showing the details of the switch system depicted in FIGS. 2 and 3 according to an embodiment of the present invention. As shown in the embodiment of FIG. 4, the switch system includes a full bridge inverter switch formed from switches SW1, SW2, SW3, SW4, SW5 and SW6, which may be any type of conventional switch. Switches SW1, SW2, SW3, SW4, SW5 and SW6 connect capacitor 240 to lines L1, L2 and L3 via an inductive coupling connection formed from inductors I1, I2 and I3, respectively. In particular, switches SW1 and SW2 are coupled to line L1 via inductor I1, switches SW3 and SW4 are coupled to line L2 via inductor I2, while switches SW5 and SW6 are coupled to line L3 via inductor I3. In operation, capacitor 240 is set to a power factor correction capacitance value per the closing of SW1 and SW2 by line L1, SW3 and SW4 by line L2, or SW5 and SW6 by line L3. The configuration shown in FIG. 4 is able to inject a desired amount of reactive power or real power, correct power factor and perform voltage stabilization by properly controlling switches SW1-SW6 to provide a pseudo sine wave waveform of proper phase and amplitude. In one embodiment, the configuration shown in FIG. 4 is able to inject harmonics compensation currents by using the measured harmonic content from meter 200 and having controller 250 decide what level of harmonic compensation to implement.

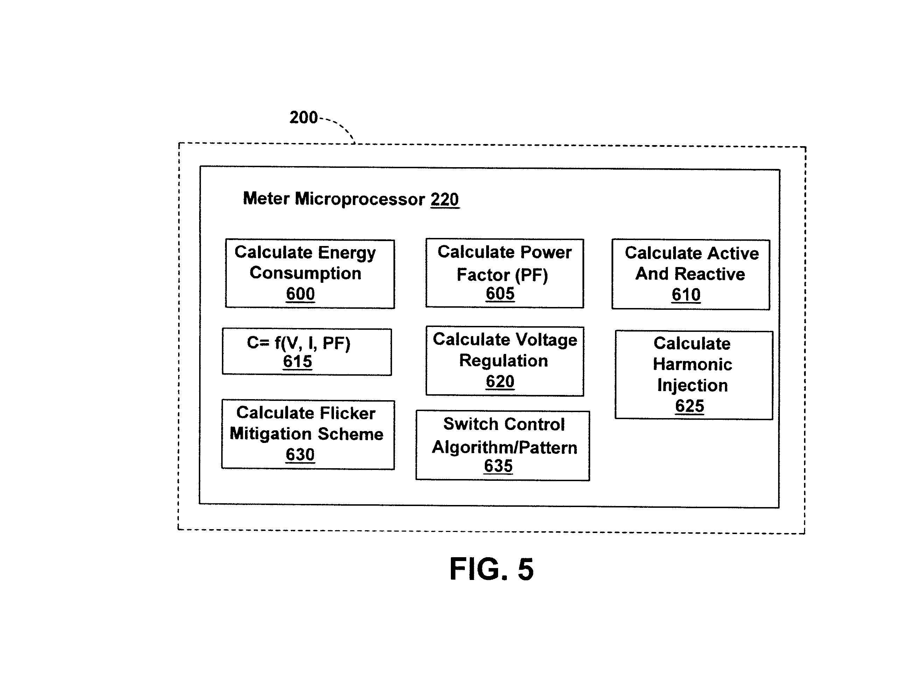

FIG. 5 is a schematic block diagram showing some of the functionalities performed in the meter microprocessor 220 depicted in FIGS. 2-4 according to one embodiment of the present invention. In particular, FIG. 5 shows some of the processing functions performed by the meter microprocessor 220 to determine the aforementioned plurality of power related parameters based on values provided by various measurement devices (e.g., current and voltage measurement devices) implemented in the AC network. Each of the processing functions performed by meter microprocessor 220 is represented by logic components 600, 605, 610, 615, 620, 625, 630 and 635.

One of the processing functions performed by meter microprocessor 220 includes determining the electrical energy consumption of the electrical power system that electric meter 200 is associated with the utility line connection. As shown in FIG. 5, logic component 600 performs this function. Generally, the electrical energy consumption is determined as a function of load-side voltage and current. In one embodiment, electrical energy consumption is determined by: collecting the product of instantaneous voltage and current over a specified interval of time. From the instantaneous measured samples of the voltage and current values, instantaneous power or watts are initially computed by using the formula: Watts$_i$= $V_i$*$I_i$ (where 'V' denotes voltage, 'I' denotes current, and 'i' denotes the instantaneous values). The following formula gives the energy consumption or Watt-hours when the instantaneous values of power are summed up over a specified time period:

$$Watt-hours(Energy) = \sum_{i=0}^{T} V_i * I_i \ .$$

From the instantaneous sampling values of the voltages and currents, logic component 605 determines the power factor of the load in the customer end. In one embodiment, power factor is determined by: detecting the time lag between the zero crossing instants of the instantaneous sampling data of the voltage and current. When the phase delay between the voltage and current is Φ, then the power factor is computed as the cosine of the phase delay, which is given by Power Factor = cos(Φ).

Logic component 610 determines active power and reactive power. Generally, active power and reactive power are determined as a function of the power factor. In one embodiment, active power and reactive power are determined by: using the following formulas: Active Power = $V_{rms}$*$I_{rms}$*Power Factor, where the Power Factor is determined as cos(Φ), $V_{rms}$ and $I_{rms}$ are the Root Mean Square values of the line voltage and load current computed in the micro-controller (not shown) which resides in meter microprocessor 220. The reactive power in the system is calculated by using the power factor as Reactive Power = $V_{rms}$*$I_{rms}$*$\sqrt{(1-Power\ Factor^2)}$ or $V_{rms}$*$I_{rms}$*sin(Φ). Note that power factor, active power, and reactive power calculation formulas will take different forms for three phase energy meters.

Logic component 615 determines a power factor correction capacitance value for capacitor 240 (FIGS. 2-4) that is necessary to enable the electrical power system to operate at a unity power factor. By having capacitor 240 (FIGS. 2-4) set to a power factor correction capacitance value that approximates a unity power factor, capacitor 240 is able to control the amount of reactive power provided to the customer end from the utility. This helps in minimizing the current drawn by the customer loads and improves the system efficiency.

Controlling the amount of reactive power provided to the customer end is beneficial because improved power factor reduces the current drawn by the loads to transfer the same amount of energy when compared with the case of low power factor. The reduction in the current consumption reduces the transmission and distribution losses to a great extent, as the losses are proportional to the square of the current. In some instants, the charge on the electricity is divided into two categories like cost of active power and cost of reactive power. Where in case of low power factor loads, the cost of reactive power will be high for transmitting the same active power. Reactive power charges can be made significantly smaller by the introduction of power factor correction capacitors which reduces an electrical load and minimizes wasted energy, improving the efficiency and reducing the electricity bill. Those skilled in the art will recognize that it is not always necessary to reach a power factor of 1 (e.g., unity). A cost effective solution can be achieved by increasing the power factor to a value greater that approximates unity.

In one embodiment, the power factor correction capacitance value is determined as a function of the load-side voltage, current and power factor. In one embodiment, the power factor correction capacitance value is determined by: equating the reactive power calculated by electric meter 200 with the reactive power that can be provided by a capacitance of value $C_{cap}$. The formula that can be used to determine the value of the capacitance required is given by: $C_{cap}$= Calculated Reactive Power/($V_{rms}^2$ *$\omega$), where '$\omega$' is calculated as 2Πf (f is the frequency of the voltage supply in general (e.g., can be either 50Hz or 60Hz)).

Logic component 620 calculates voltage regulation which provides customers with tangible improvement in the quality of energy that they receive (e.g., reduction in flicker, reduction in overvoltages during equipment start). Generally, the voltage regulation is determined by a close loop control on the voltage measurement which controls the amount of reactive energy (steady state and dynamic) generated at point of coupling.

Logic component 625 calculates harmonic compensation currents that are to be injected in lines L1, L2 and L3. Generally, logic component 625 calculates the harmonic content measured in meter 200. Controller 250 decides what level of harmonic compensation to inject in lines L1, L2 and L3.

Logic component 630 calculates a flicker mitigation scheme. Flicker, which is annoying light intensity fluctuations, is a power quality problem caused by "large" time-varying loads. A flicker mitigation scheme will compensate for the harmonics and voltage fluctuation in lines L1, L2 and L3. Logic component 630 generally calculates a flicker mitigation scheme by controlling the reactive power injected at the point of coupling.

Logic component 635 determines a switch control algorithm/pattern. Generally, a switch control algorithm/pattern is what permits one to approximate a desired fundamental waveform (amplitude and phase), but also harmonic content. Logic component 635 determines the switch control algorithm/pattern by providing timely ON and OFF controls to the switches SW1-SW6.

With regard to functionalities described with respect to FIG. 5, those skilled in the art will recognize that meter microprocessor 220 can perform other processing functions in addition to the ones described above with respect to the various embodiments of the present invention. For example, meter microprocessor 220 may have logic components that can determine tampering of electric meter 200, whether conditions are suitable to close or open various relays associated with electric meter 200, phase relationships between line-side voltage and load-side voltage.

Furthermore, those skilled in the art will recognize that electric meter 200 can perform more functions than those previously described herein. For instance, electric meter 200 can determine the total usage of the electric service by a consumer, the rate of usage of the service, the amount of electricity provided in watts. These are only a small listing of usage statistics that may be computed by electric meter 200. Other well-known statistics are within the scope of the various embodiments of the present invention.

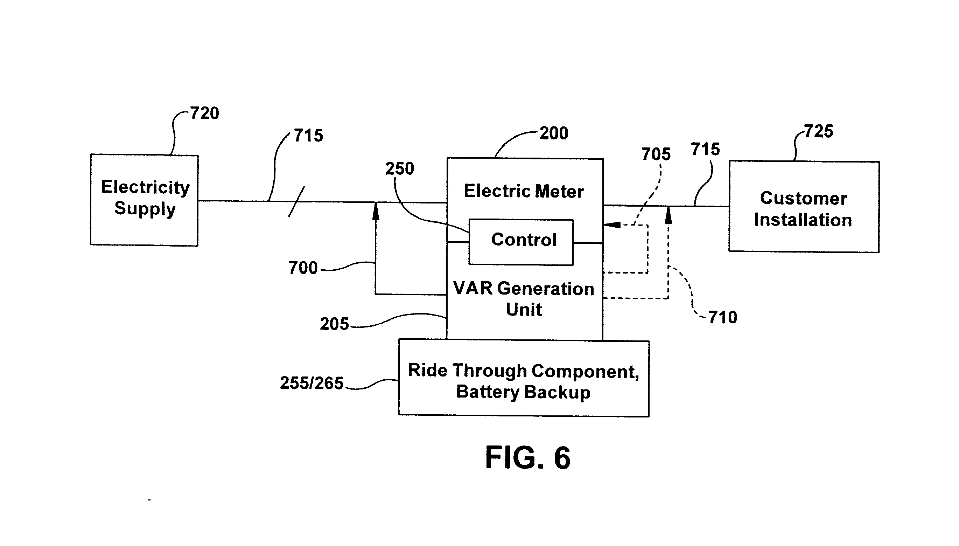

FIG. 6 is a schematic block diagram illustrating electric meter 200 coupled in parallel with VAR generation unit 205 according to an embodiment of the present invention. In addition, FIG. 6 shows that ride-through component 255 and battery backup 265 is coupled in parallel with VAR generation unit 205. Within this parallel configuration, VAR generation unit 205 can inject active current, reactive current, perform voltage stabilization of the voltage level and perform a desired amount of harmonics compensation of the voltage level, in locations that are upstream or downstream of electric meter 200. Upstream injection is suitable for utility applications, while downstream injection is suitable for customer applications. The various locations of injection in FIG. 6 are represented by data lines 700, 705 and 710. In particular, data line 700 performs injection into the utility lines 715 that provide electricity supply 720 to a customer installation 725 at a location that is upstream of electric meter 200, while data lines 705 and 710 perform injection downstream of electric meter 200. Data line 700 injects upstream of electric meter 200 in order to control, improve or regulate any of the desired controlled variables such as voltage, reactive power, harmonic, flicker, etc. With respect to data line 705, injection is fed back into electric meter as it can be upstream of the disconnect switch 230 (FIGS. 2-4) and give flexibility to the customer to control voltage, even when the disconnect switch is open. This is a variation to data line 710, which injects downstream of electric meter 200 so back up power can be coordinated with the state of electricity supply 720 and the state of the disconnect switch 230 (FIGS. 2-4). Although not shown in FIG. 6, a switching mechanism may be used to facilitate injection back into electric meter 200 or into utility line 715 that feeds into customer installation 725. In this embodiment, the switching mechanism is used in order to provide multiple operating configurations to the customer.

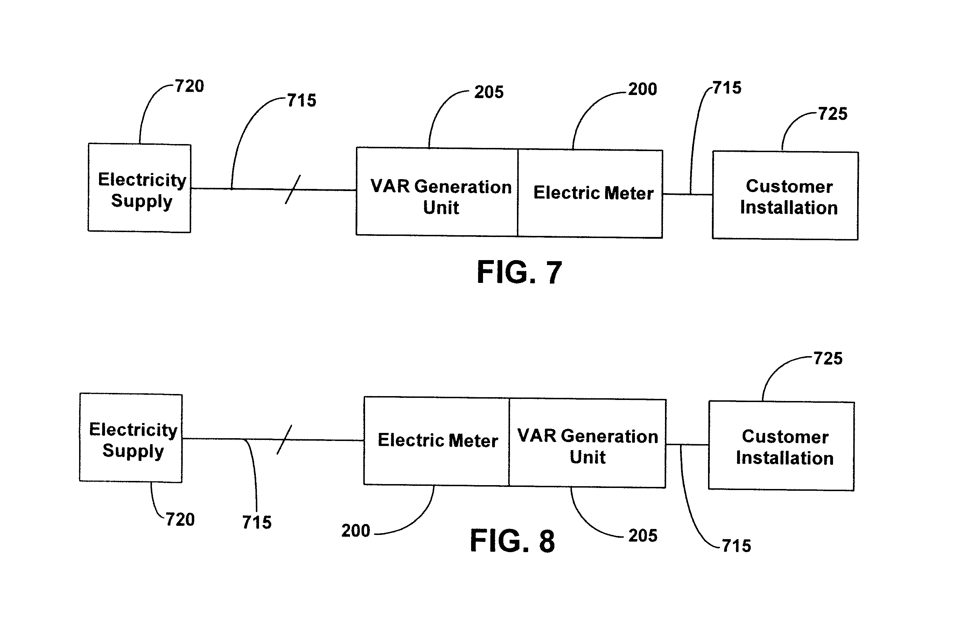

FIG. 7 is a schematic block diagram illustrating VAR generation unit 205 located upstream from electric meter 200 and coupled thereto in series according to an embodiment of the present invention. In this serial configuration, VAR generation unit 205 can inject active current, reactive current, perform voltage stabilization of the voltage level and perform a desired amount of harmonics compensation of the voltage level, in a location that is upstream of electric meter 200. In this embodiment, injection that is upstream of electric meter 200 may be performed in applications where it is desirable to obtain full ride-through capability.

FIG. 8 is a schematic block diagram illustrating VAR generation unit 205 located downstream from electric meter 200 and coupled thereto in series according to an embodiment of the present invention. In this serial configuration, VAR generation unit 205 can inject active current, reactive current, perform voltage stabilization of the voltage level and perform a desired amount of harmonics compensation of the voltage level, in a location that is downstream of electric meter 200. In this embodiment, injection that is downstream of electric meter may be performed in applications where it is desirable for the customer to control its demands rather than the utility.

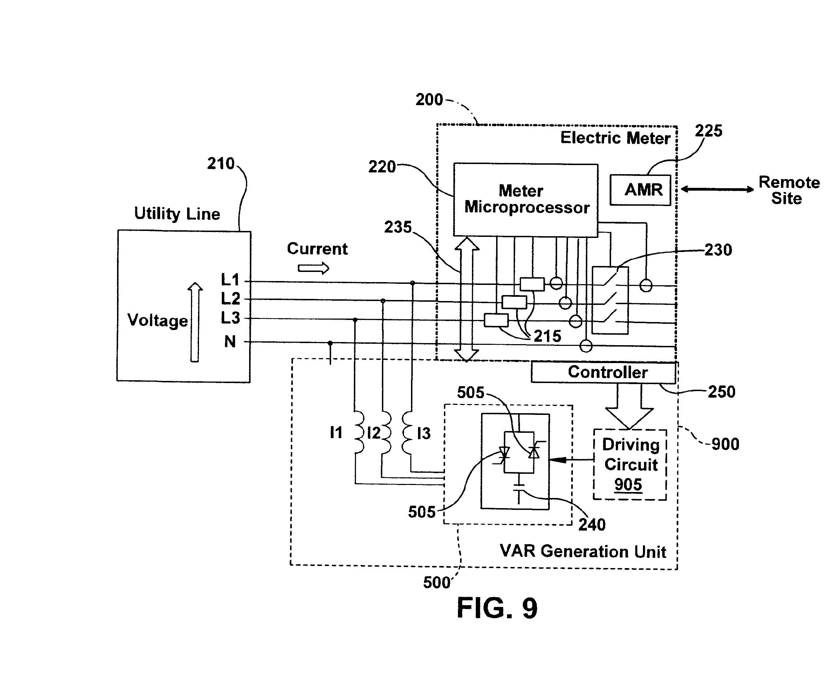

FIG. 9 is a schematic diagram of another electric meter integrated with a VAR generation unit according to another embodiment of the present invention. In this embodiment, a VAR generation unit 900 employs a different switch system and capacitor configuration as opposed to the embodiment depicted in FIGS. 2-4. As shown in the embodiment of FIG. 9, the switch system includes a power electronic switch 500 formed from at least one thyristor 505. Examples of thyristors that may be used include a silicon controlled rectifier (SCR) and a triode alternating current (AC) switch (TRIAC). In one embodiment, power electronic switch 500 is formed from at least one of: back-to-back connected thyristors, a TRIAC, bidirectional switches and back-to-back connected uni-directional switches.

As shown in FIG. 9, a driving circuit 905 receives a firing angle pulses with a precalculated firing angle of ($\alpha$) determined by meter microprocessor 200 from controller 250. Driving circuit 905 uses the firing angle pulses to activate capacitor 240. In addition to controlling capacitor 240, driving circuit 905 provides isolation of the control circuitry of electric meter 200 from capacitor 240. The driving circuit may be any well-known driving circuit that can be used to drive the corresponding capacitor 240. Alternatively, it is within the realm of those skilled in the art to design a driving circuit that may be used to drive capacitor 240.

Note that the present topology of the VAR generation unit 900 shown in Fig 9 is suitable for use with a single phase energy meter. Those skilled in the art will recognize that VAR generation unit 900 is not limited to use with a single phase energy meter and can be applied to a 1, 2, 3, ... N phase system. For example, for a three phase energy meter, VAR generation unit 900 would take the form of the VAR generation unit 250 depicted in FIG. 4, excluding the ride through capacitor 260 and the battery back-up system 265.

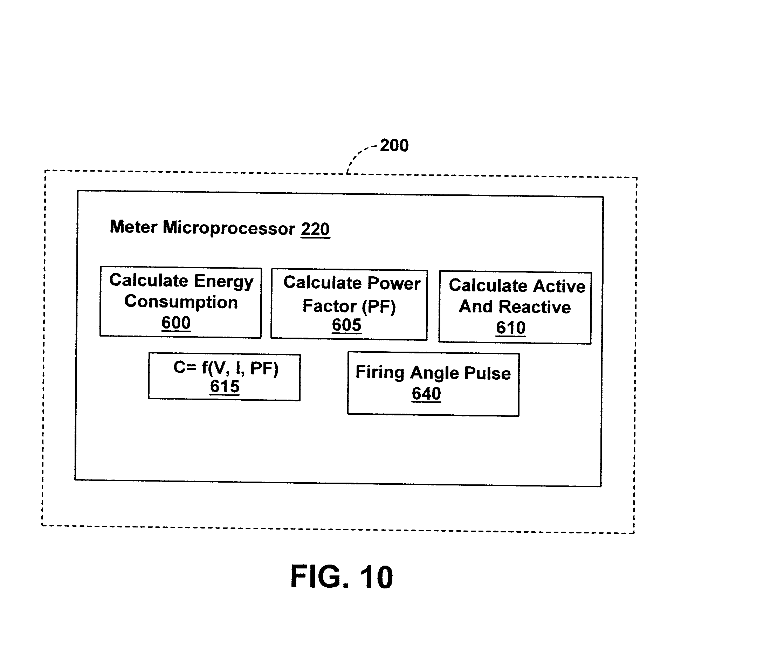

FIG. 10 is a schematic block diagram showing some of the functionalities performed in meter microprocessor 220 according to the embodiment of the present invention depicted in FIG. 9. In this embodiment, meter microprocessor 220 includes the processing functions represented by logic components 600, 605, 610, 615, and 640. Logic components 600 (calculate energy consumption, 605 (calculate power factor), 610 (calculate active and reactive power) and 615 (calculate power factor correction capacitance value) are the same as described above with respect to FIG. 5, and therefore, a separate discussion is not provided for the embodiment depicted in FIG. 10.

Logic component 640 determines a firing angle pulse ($\alpha$) for activating capacitor 240 (FIG. 9). Generally, the firing angle pulse ($\alpha$) is determined as a function of the power factor correction capacitance as determined by logic component 615. In one embodiment, the firing angle pulse ($\alpha$) is determined: as a function of the required value of the capacitance to the maximum value of the installed capacitance, $\alpha = f(C_{cap}, C_{inst})$, where $C_{inst}$ is the maximum value of the installed capacitance in the meter, whose value will be fed to the electric meter processing unit at the time of manufacturing.

In various embodiments of the present invention, portions of electric meter 200 and VAR generation unit 205 can be implemented in the form of an entirely hardware embodiment, an entirely software embodiment or an embodiment containing both hardware and software elements. In one embodiment, the processing functions performed by electric meter 200 and VAR generation unit 205 may be implemented in software, which includes but is not limited to firmware, resident software, microcode, etc.

Furthermore, the processing functions performed by electric meter 200 and VAR generation unit 205 can take the form of a computer program product accessible from a computer-usable or computer-readable medium providing program code for use by or in connection with a computer or any instruction execution system (e.g., processing units). For the purposes of this description, a computer-usable or computer readable medium can be any computer readable storage medium that can contain or store the program for use by or in connection with the computer or instruction execution system.

The computer readable medium can be an electronic, magnetic, optical, electromagnetic, infrared, or semiconductor system (or apparatus or device). Examples of a computer-readable medium include a semiconductor or solid state memory, a random access memory (RAM), a read-only memory (ROM), a rigid magnetic disk and an optical disk. Current examples of optical disks include a compact disk - read only memory (CD-ROM), a compact disk - read/write (CD-R/W) and a digital video disc (DVD).

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

While the disclosure has been particularly shown and described in conjunction with a preferred embodiment thereof, it will be appreciated that variations and modifications will occur to those skilled in the art. Therefore, it is to be understood that the appended claims are intended to cover all such modifications and changes as fall within the true spirit of the disclosure.

**Claims**

1. A system, comprising:

   an electric meter (200) that determines a plurality of power related parameters for an AC network; and
   a VAR generation unit (205) integrated with the electric meter (200) that uses the plurality of power related parameters to inject a desired amount of reactive power in the AC network and correct power factor.

2. The system according to claim 1, wherein the VAR generation unit (205) is coupled in parallel with the electric meter (200).

3. The system according to claim 1, wherein the VAR generation unit (205) is coupled in series with the electric meter (200).

4. The system according to claim 2 or 3, wherein the VAR generation unit injects the desired amount of reactive power in the AC network in a location that is upstream of the electric meter.

5. The system according to claim 2 or 3, wherein the VAR generation unit injects the desired amount of reactive power in the AC network in a location that is downstream of the electric meter.

6. The system according to any of claims 1 to 5, wherein the VAR generation unit (205) comprises a capacitor (240), a switch system (245) that connects the capacitor (240) into the AC network, and a controller (250) that controls the connection of the capacitor (240) into the AC network by the switch system (245).

7. The system according to claim 6, wherein the VAR generation unit (205) performs voltage stabilization of the voltage level in the AC network.

8. The system according to claim 7, wherein the voltage stabilization is performed in an operating range determined as function of the size of the capacitor (240) and a predetermined control strategy implemented by the controller (250).

9. The system according to claim 6, wherein the switch system comprises at least one of: back-to-back connected thyristors, a TRIAC, bidirectional switches, back-to-back connected uni-directional switches, and full bridge inverter.

10. The system according to claim 6, wherein the VAR generation unit (205) performs a desired amount of harmonics compensation of the voltage level in the AC network.

11. The system according to any preceding claim, further comprising a ride-through component (255) coupled to the VAR generation unit (205) that sustains voltage in the AC network.

12. The system according to claim 11, wherein the ride-through component comprises one of, a ride-through capacitor or other storage element, a battery and an optional DC/AC converter to match the battery voltage to a bus operating voltage, or a ride-through capacitor coupled to a battery system.

13. The system according to any preceding claim, further comprising a power injector (265) coupled to the VAR generation unit (205) that injects additional power in the AC network.

14. The system according to any preceding claim, further comprising a plurality of measurement devices located within the AC network that measures predetermined electrical parameters that are used by the electric meter to determine the plurality of power related parameters for the AC network.

Utility Provider
120

140

100

Electric Meter
110

130

FIG. 1

**FIG. 2**

EP 2 472 693 A2

**FIG. 3**

Utility Line 210

Current

Voltage

L1 L2 L3 N

Measurment Devices 300

305

Electric Meter 200

Meter Microprocessor

AMR 225

Remote Site

230

220

235

215

Controller 250

VAR Generation Unit 205

Switch System 245

240

Ride Through Component 255

260

Battery Backup 265

DC/DC Converter

270

275

FIG. 4

**Meter Microprocessor 220**

| | | |
|---|---|---|
| **Calculate Energy Consumption** <br> **600** | **Calculate Power Factor (PF)** <br> **605** | **Calculate Active And Reactive** <br> **610** |
| **C= f(V, I, PF)** <br> **615** | **Calculate Voltage Regulation** <br> **620** | **Calculate Harmonic Injection** <br> **625** |
| **Calculate Flicker Mitigation Scheme** <br> **630** | **Switch Control Algorithm/Pattern** <br> **635** | |

**FIG. 5**

**FIG. 6**

EP 2 472 693 A2

```
┌────────────┐                    ┌──────────────┬──────────────┐        ┌──────────────┐
│ Electricity│         715        │ VAR Generation│ Electric Meter│        │  Customer    │
│   Supply   │────────/───────────│     Unit     │              │────────│ Installation │
└────────────┘                    └──────────────┴──────────────┘        └──────────────┘
     720                                 205            200      715          725
```

## FIG. 7

```
┌────────────┐                    ┌──────────────┬──────────────┐        ┌──────────────┐
│ Electricity│         715        │Electric Meter│ VAR Generation│        │  Customer    │
│   Supply   │────────/───────────│              │     Unit     │────────│ Installation │
└────────────┘                    └──────────────┴──────────────┘        └──────────────┘
     720        715                    200            205                     725
                                                                              715
```

## FIG. 8

FIG. 9

┌─ 200

Meter Microprocessor 220

┌─────────────────┐ ┌─────────────────┐ ┌─────────────────┐
│ Calculate Energy│ │ Calculate Power │ │ Calculate Active│
│ Consumption     │ │ Factor (PF)     │ │ And Reactive    │
│ 600             │ │ 605             │ │ 610             │
└─────────────────┘ └─────────────────┘ └─────────────────┘

┌─────────────────┐     ┌─────────────────┐
│ C= f(V, I, PF)  │     │ Firing Angle Pulse│
│ 615             │     │ 640             │
└─────────────────┘     └─────────────────┘

# FIG. 10